(19) Europäisches Patentamt
European Patent Office
Office européen des brevets

(11) **EP 3 983 346 B1**

(12) # EUROPÄISCHE PATENTSCHRIFT

(45) Veröffentlichungstag und Bekanntmachung des Hinweises auf die Patenterteilung:
**31.07.2024 Patentblatt 2024/31**

(21) Anmeldenummer: **20731459.2**

(22) Anmeldetag: **08.06.2020**

(51) Internationale Patentklassifikation (IPC):
**C03C 3/06** *(2006.01)*    **C03C 13/04** *(2006.01)*
**C03C 25/6208** *(2018.01)*    **C03C 25/6226** *(2018.01)*
**C03B 37/00** *(2006.01)*

(52) Gemeinsame Patentklassifikation (CPC):
**C03C 3/06; C03B 37/01248; C03C 13/045; C03C 25/6208; C03C 25/6226;** C03B 2201/075; C03B 2201/12; C03B 2201/20; C03B 2205/42; C03C 2201/11; C03C 2201/12; C03C 2201/23

(86) Internationale Anmeldenummer:
**PCT/EP2020/065810**

(87) Internationale Veröffentlichungsnummer:
**WO 2020/249508 (17.12.2020 Gazette 2020/51)**

(54) **QUARZFASER MIT WASSERSTOFF-BARRIERESCHICHT UND VERFAHREN ZU DEREN HERSTELLUNG**

QUARTZ FIBRE WITH HYDROGEN BARRIER LAYER AND METHOD FOR THE PRODUCTION THEREOF

FIBRE DE QUARTZ DOTÉE D'UNE COUCHE BARRIÈRE À L'HYDROGÈNE ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2019 DE 102019115928**

(43) Veröffentlichungstag der Anmeldung:
**20.04.2022 Patentblatt 2022/16**

(73) Patentinhaber: **j-fiber GmbH**
**07751 Jena (DE)**

(72) Erfinder: **HAEMMERLE, Wolfgang**
**07743 Jena (DE)**

(74) Vertreter: **Sonnenhauser, Thomas Martin**
**Wuesthoff & Wuesthoff**
**Patentanwälte und Rechtsanwalt PartG mbB**
**Schweigerstraße 2**
**81541 München (DE)**

(56) Entgegenhaltungen:
**WO-A2-2007/069275    DE-T2- 69 900 363**

**Beschreibung**

Die Erfindung betrifft eine Quarzglasfaser mit Wasserstoff-Barriereschicht. Als optische Quarzglasfaser ausgeführt, kann sie als Lichtwellenleiter verwendet werden. Zudem betrifft die Erfindung ein Verfahren zur Herstellung der Quarzglasfaser.

**Technische Grundlagen und Stand der Technik**

Die Diffusion von Wasserstoff in Quarzglasfasern hinein verursacht im wellenleitenden Bereich (bei Multimodefasern ist dies vor allem der Faserkern) Wasserstoff-induzierte Zusatzdämpfungen, die die Verwendbarkeit der Glasfaser wesentlich einschränken bzw. die Faser sogar unbrauchbar machen können (siehe https://www.corning.com/media/worldwide/global/documents/sfiber%20WP9007_Hy drogen%20Aging.pdf).

Deshalb ist es vorteilhaft, Wasserstoff-unempfindliche Fasern herzustellen. Eine Wasserstoff-unempfindliche Faser besteht üblicherweise aus einer normalen Quarzfaser, die mit einer hermetischen Coatingschicht ummantelt ist. Als hermetische Schutzschicht dienen im wesentlichen Kohlenstoff- oder metallische Coatingschichten wie, z.B. aus Aluminium. Es ist aber bekannt, dass hermetische Kohlenstoff-Schichten nur bis zu einer Temperatur von ca. 150 °C als Wasserstoff-Barriere wirken (siehe https://www.lightbrigade.com/productionFiles/Resource-PDF/Whitepapers/Hermetic-Fiber-for-Oil-and-Gas.aspx). Bei Temperaturen darüber hinaus sind Kohlenstoff-Schichten für Wasserstoff im Wesentlichen durchlässig. Da die Kohlenstoffschichten typischerweise nur eine Dicke von ca. 50 nm aufweisen, müssen für den mechanischen Schutz der Fasern zusätzlich noch andere Polymer-Coatingschichten appliziert werden.

Es ist auch bekannt, dass Kohlenstoffschichten als hermetische Barriereschichten die Faserfestigkeit um ca. 40 bis 50 % gegenüber Standardfasern verringern (siehe https://www.laserfocusworld.com/articles/print/volume-51/issue-04/features/fiberoptic-components-harsh-environment-optical-fiber-coatings-beauty-is-only-skindeep.html).

Damit sind Fasern mit Kohlenstoff-Schichten wegen der verringerten Faserfestigkeit für viele Anwendungen nicht geeignet. Die Herstellung von Fasern mit hermetischen Kohlenstoff-Schichten erfordert zudem spezielle Kohlenstoff-Reaktoren, die während des Faserziehprozesses die Kohlenstoff-Schicht applizieren. Die Fertigung von hermetisch wirkenden Kohlenstoffschichten erfordert außerdem wegen der geringen Schichtdicken eine relativ aufwendige Kontrolle (Schichtdicke ca. 50 nm). Ein weiteres Problem bei der Herstellung hermetischer Kohlenstoff-Coatingschichten besteht darin, eine störungsfreie Schichtdicke von einigen Atomlagen zu realisieren. Bereits kleinste Schichtstörungen verhindern, dass die Schicht hermetisch dicht ist. Außerdem weisen Carbon-Coating-beschichtete Fasern eine gegenüber Standardfasern signifikant reduzierte Faserfestigkeit auf, die die Anwendbarkeit zusätzlich wesentlich einschränkt. Der erhöhte Aufwand bei der Herstellung und Prozesskontrolle solcher Fasern führen außerdem zu einem deutlich höheren Faserpreis gegenüber Standardfasern.

Es ist zudem bekannt, dass auch spezielle metallische Coatings gegenüber dem Eindringen von Wasserstoff oder Feuchtigkeit hermetische Eigenschaften aufweisen. Metallische Coatings, wie z.B. aus Aluminium, Kupfer oder Gold, lassen sich mit Schichtdicken von ca. 15 bis 25 $\mu$m herstellen (siehe https://www.researchgate.net/publication/253791167). Die Metallschicht-Applizierung ist jedoch technologisch aufwändig und im Allgemeinen nur bei kurzen Faserlängen störungsfrei realisierbar. Deshalb werden größere Faserlängen von Metall-beschichteten Fasern kommerziell nicht angeboten.

Die Metall-beschichteten Fasern weisen, wegen des hohen E-Moduls des Metalls und wegen des im Vergleich zu Quarzglas hohen thermischen Ausdehnungskoeffizienten des metallischen Coatingmaterials, hohe Mikrokrümmungsverluste auf (siehe https://www.researchgate.net/publication/253791167). Um die Mikrokrümmungsverluste zu reduzieren, werden größere Faserdurchmesser von 200 $\mu$m oder größer gegenüber dem Standard-Faserdurchmesser von 125 $\mu$m vorgeschlagen. Bei Vergrößerung des Faserdurchmessers treten bei makroskopischen Faserkrümmungen jedoch erhöhte Makrokrümmungsverluste auf.

Außerdem können metallische Coatings unter widrigen Umgebungsbedingungen eine Korrosion aufweisen, die die Anwendbarkeit der Fasern deutlich einschränkt (siehe https://www.lightbrigade.com/productionFiles/Resource-PDF/Whitepapers/Hermetic-Fiber-for-Oil-and-Gas.aspx). Fasern mit metallischem Coating finden deshalb nur in Kurzstrecken-Verbindungen und unter nichtkorrosiven Umgebungsbedingungen Anwendung.

Die EP 0095729 A2 beispielsweise beschreibt das Herstellungsverfahren einer optischen Faser mit hermetischem Coating während des Faserziehprozesses durch eine thermochemische Abscheidung mit heterogener Nukleation auf der heißen Glasfaseroberfläche. Die Glasfaser mit hermetischem Coating kann dann vorzugsweise mit einer weiteren Polymerschicht versehen werden, um die hermetische Schicht vor Umwelteinflüssen zu schützen.

Alle oben genannten hermetischen Coatingtypen erfüllen nicht gleichzeitig die Anforderungen bezüglich Faserfestigkeit, Hermetizität gegenüber Wasserstoff und niedriger optischer Dämpfung (Mikrokrümmungs- bzw. Makrokrümmungsverluste). In WO2007/069275A2 wird zur Verringerung der Wasserstoff-Empfindlichkeit und damit zur Reduzierung von Wasserstoff-induzierten Verlusten in gezogenen Fasern eine Deuterium-Behandlung definierter Dauer, mit definierter Deuteriumkonzentration, definiertem Druck und definierter Temperatur vorgeschlagen. Die E'- und NBOHC-Glasdefekte in der Faser reagieren mit Deuterium und bilden Si-OD und SI-D-Verbindungen, deren Absorptionsbereiche außerhalb der üblichen optischen Anwendungs-Wellenlängenbereiche von 850 bis 1550 nm liegen. Um diese Deuteriumbehandlung fachgerecht durchführen zu können, ist ein spezieller Autoklav erforderlich, um in vertretbaren Zeiten diese Behandlung durchführen zu können.

Weiterhin beschreibt die DE 699 00 363 T2 die UV-Behandlung von Quarzglasfasern.

Aus Pandey et al. ("Refractive index profile design to improve hydrogen diffusion resistance property of optical fiber", ICOP 2009, International Conference on Optics and Photonics, India, Nov. 2009) ist bekannt, dass durch die Einführung von speziell dotierten Wasserstoff-Barriere-Schichten in den äußeren Claddingbereich Wasserstoff-Diffusion in der Faserkern vermindert wird. Diese Lösung ist jedoch sehr aufwendig, weil die Barriereschichten aus GeO2-F- und aus P2O5-F-dotierten Schichten im äußeren Claddingbereich bestehen und beispielsweise mit dem MCVD-Beschichtungsverfahren kostenintensiv mit dem Kernbereich und dem inneren undotierten Claddingbereich gefertigt werden müssen. Der Abstand der dotierten Barriereschichten zum wellenleitenden Kernbereich ist aus Kostengründen deutlich geringer und schmaler als in der von uns vorgeschlagenen Lösung.

Quarzglasfasern mit einer Wasserstoff-Unempfindlichkeit, einer geringen Faserdämpfung und hoher Faserfestigkeit finden weltweit eine breite Anwendung, vorzugsweise in optischen Kommunikationssystemen und in Fasersensoren.

Wie bereits oben ausgeführt, kann die Wasserstoff-Empfindlichkeit durch eine Kohlenstoff- oder eine spezielle Metallschicht vermindert werden. Allerdings wird diese Eigenschaft der Wasserstoff-Unempfindlichkeit nur durch eine verschlechterte Faserfestigkeit oder deutlich erhöhte Faserdämpfungswerte ermöglicht.

Es bestand somit ein Bedarf an Wasserstoff-unempfindlichen Quarzglasfasern mit guten mechanischen und optischen Eigenschaften, wobei die Quarzglasfasern relativ kostengünstig herstellbar sein sollen.

## Zusammenfassung der Erfindung

Die Erfindung betrifft eine Quarzglasfaser (oder kurz "Quarzfaser" oder "Glasfaser"), sowie ein Verfahren zu deren Herstellung. Die Quarzfasern weisen eine Wasserstoff-Barriereschicht, eine hoher Faserfestigkeit und eine niedriger Faserdämpfung auf.

Durch die speziellen Herstellungsbedingungen der Glasfaser beim Faserziehprozess werden in einer äußeren undotierten Claddingschicht aus OH-armen Quarzglas, außerhalb des wellenleitenden Kernbereiches gezielt E'- und NBOHC-(non - bridging oxygen hole center) Defekte erzeugt, die im späteren Betrieb mit in die Fasern eindiffundierenden Wasserstoff eine chemische Verbindung eingehen und damit als Wasserstoff-Barriere dienen. Die speziellen Defekte werden zum einen durch spezielle Faserziehbedingungen (z.B. erhöhte Ofentemperatur gegenüber Standardziehbedingungen) sowie zusätzlich durch eine gezielte quasi-axiale Einstrahlung von intensiver UV-Laserstrahlung (z.B. Excimer-Laser) in das Jacketingrohr vor dem Eintauchen der speziell preparierten Preform (online Jacketing während des Faserziehprozesses) in den Ziehofen erzeugt. Die UV-Strahlung während des Ziehprozesses soll im Claddingbereich der Faser zusätzlich sowohl E'-als auch NBOHC-Defekte generieren.

Während der Stand der Technik eine Wasserstoff-Unempfindlichkeit im Faserkern dadurch erzielen möchte, dass Defekte vermieden werden (siehe beispielsweise Pandey et al., "Refractive index profile design to improve hydrogen diffusion resistance property of optical fiber" ICOP 2009, International Conference on Optics and Photonics, India, Nov. 2009), beruht das Konzept der vorliegenden Erfindung auf einem völlig anderen Ansatz, nämlich der Erhöhung der Defektkonzentration in der Cladding-Beschichtung.

Aus Hibino et al. ("ESR Study on E'-Centers Induced by Optical Fiber Drawing Process", Japanese Journal of Applied Physics, Volume 22, Part 2, Nr. 12) ist bekannt, dass die Gegenwart von OH die Bildung von Sauerstoffvakanzen unterdrückt. Da die vorliegende Erfindung gerade auf der Bildung von derartigen Defekten basiert, ist es bevorzugt, ein Quarzglasmaterial mit niedrigem OH-Gehalt zu verwenden.

Es wurde zudem überraschend festgestellt, dass der Fluorgraben (Fluor-Dotierung) benötigt wird, um die Defekte nur in der Claddingschicht entstehen zu lassen. Ohne den Brechzahlgraben würde die UV-Strahlung zur Defekterzeugung unterhalb der Ziehzwiebel auch in die Preform- bzw. den Faserkern geleitet werden und dort UV-induzierte unerwünschte Glasdefekte erzeugen.

Durch das erfindungsgemäße Verfahren kann ein großer Abstand zwischen der Barriereschicht und dem wellenleitendem Kernbereich erzielt werden. Insbesondere weist die erfindungsgemäße Quarzfaser den Vorteil auf, dass sie unempfindlich gegenüber Wasserstoffdiffusion während ihrer Verwendung ist. Dies verhindert von Wasserstoffdiffusion erzeugte Zusatzdämpfungen.

Bei der Quarzfaser kann auf eine spezielle technologisch aufwendige Beschichtung aus Kohlenstoff bzw. aus speziellen Metallen verzichtet werden, die im Stand der Technik einen Schutz der Faser vor eindringenden Wasserstoff gewährleisten. Die Quarzfaser wird durch Wasserstoff-absorbierende Defekte im äußeren undotierten Claddingbereich (der aus dem Jacketingrohr gebildet wird), die während des Faserziehprozesses durch spezielle Ziehbedingungen und/oder durch UV-Laserstrahlung erzeugt werden, gegenüber Wasserstoff-Eindiffusion unempfindlich. Die negativen Auswirkungen der im Stand der Technik hierzu verwendeten Kohlenstoff-Schicht auf die Faserfestigkeit werden ebenso wie die negativen Auswirkungen von metallischen Schutzschichten auf die Faserdämpfung insbesondere durch Mikrobending bei der erfindungsgemäßen Lösung der Aufgabe vermieden. Die erfindungsgemäße Lösung ist zudem wesentlich kostengünstiger als das Aufbringen von zusätzlichen H2-Barriereschichten oder das Abscheiden von mehreren dotierten Barriereschichten mittels MCVD-Verfahren zwischen einem inneren und äußeren undotierten Claddingbereich.

In Gegensatz zu den bekannten Quarzglasfasern mit hermetischen Beschichtungen ist es mit der vorliegenden Erfindung möglich, Wasserstoff-unempfindliche Faser für lange Verbindungen zu erzeugen, wobei die Fasern geeignete mechanische (z.B. Faserfestigkeit) und optische Eigenschaften (d.h. niedrige optischer Dämpfung, insbesondere Mikrokrümmungs- bzw. Makrokrümmungsverluste) aufweisen und kostengünstig herstellbar sind. Hierbei ist es nicht notwendig, große Faserdurchmesser zu verwenden. Die Faserdurchmesser (Manteldurchmesser) können so unter $200\mu m$, insbesondere unter 150 $\mu m$ sein (Standard-Faserdurchmesser haben 125 $\mu m$ Manteldurchmesser). Insbesondere erfordert die vorliegende Erfindung keine aufwendige Fertigung von mehreren speziell dotierten Wasserstoff-Barriereschichten, weil die dotierten außerhalb des Kernes gelegenen Schichten über das MCVD-Beschichtungsverfahren realisiert werden können.

Die Erfindung betrifft somit ein Verfahren zur Herstellung einer Quarzglasfaser, wobei das Verfahren die folgenden Schritte aufweist:

a) Erzeugen einer Quarzglas-Primärpreform durch modifizierte chemische Gasphasenabscheidung (MCVD) in einem Quarzglas-Substratrohr, wobei die Quarzglas-Primärpreform eine Fluor-dotierte radiale Schicht auf dem Faserkern aufweist;
b) Einbringen der Quarzglas-Primärpreform in ein freies Glas-Jacketingrohr,
c) Einstrahlen von defekt-erzeugender UV-Strahlung in die Querschnittsfläche des Glas-Jacketingrohrs, während die Quarzglas-Primärpreform mit dem Glas-Jacketingrohr im Jacketing-Verfahren zum Erzeugen einer Cladding-Schicht zu einer Sekundärpreform kombiniert wird; und
d) Ziehen einer Quarzglasfaser aus der Sekundärpreform.

Die Erfindung betrifft zudem eine Quarzglasfaser hergestellt oder herstellbar mit dem erfindungsgemäßen Verfahren. Insbesondere betrifft sie eine Quarzglasfaser, aufweisend:

a) einen Faserkern aus Quarzglas,
b) eine Fluor-dotierte radiale Schicht auf dem Faserkern,
c) eine Cladding-Schicht aus Quarzglas mit einer OH-Konzentration von $\leq 0{,}2$ ppm, einem Chlor-Gehalt 800-2000 ppm und/oder einem Brechungsindex von +0,35 bis $+0{,}5\times 10^{-3}$ auf dem Faserkern,
wobei die Quarzglasfaser dadurch gekennzeichnet ist, dass
d) die Cladding-Schicht E'- und NBOHC-Defekte aufweist.

## Detaillierte Beschreibung der Erfindung

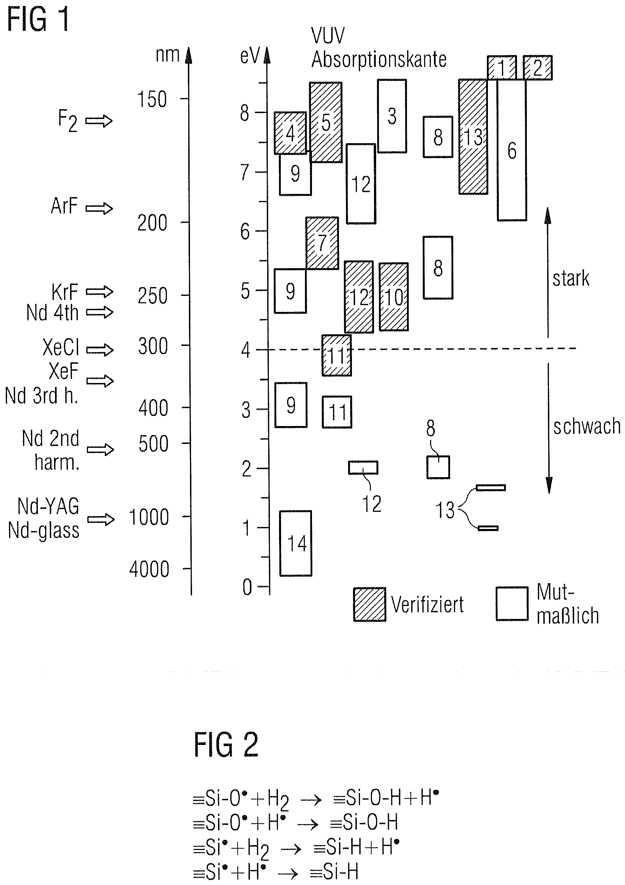

Die Idee der vorliegenden Erfindung besteht darin, im Claddingbereich einer Quarzglasfaser gezielt E'- und NBOHC-Glasdefekte während das Faserziehprozesses zu erzeugen, die später mit in die Faser eindringenden molekularen Wasserstoff reagieren und somit eine Wasserstoff-Diffusionsbarriere aufbauen. Es ist bekannt, dass sowohl E'- als auch NBOH (non-bridging-oxygen-hole center)-Defekte mit Wasserstoff entsprechend der Figur 2 reagieren. Die Anwesenheit von Wasserstoff im Quarzglas während der Defekterzeugung kann die Defektbildung verhindern, bzw. die Defekte reagieren dann direkt mit dem Wasserstoff (Troy et al., "Role of hydrogen loading and glass composition on the defects generated by the femtosecond laser writing process of fiber Bragg gratings" in Optical Materials Express 2(11):1663-1670, November 2012).

Wasserstoff-Moleküle erzeugen somit bei Reaktion mit E'- und NBOHC-Defekten Si-OH und Si-H Verbindungen, die jedoch außerhalb des wellenleitenden Bereiches (äußerer Claddingbereich) zu keinen erhöhten Transmissionsverlusten im wellenleitenden Kernbereich der Faser führen.

Die beiden ausgewählten Glasdefekte E' und NBOHC werden vorzugsweise durch spezielle Prozessbedingungen während des Faserziehens (z.B. erhöhte Ziehtemperatur bzw. Ofentemperatur) sowie durch quasi-axiale Einstrahlung von defekterzeugender UV-Laserstrahlung (kontinuierliche oder gepulste Excimer-Laserstrahlung) in die Querschnittsfläche des Claddingglases (freies Jacketingrohr beim online Jacketing während des Faserziehprozesses) der in den Ziehofen einfahrenden Preform erzeugt.

Damit kann die Faser unter den späteren Einsatzbedingungen abhängig von der Anzahl der erzeugten Wasserstoff-bindenden Defekte den wellenleitenden Glasbereich im Faserzentrum vor Wasserstoff schützen und die damit unerwünschten Zusatzdämpfungen verhindern.

Üblicherweise werden bei der Herstellung von optischen Fasern die Prozessbedingungen so gewählt, dass möglichst wenige ziehinduzierte Defekte erzeugt werden. Solange diese Defekte jedoch nicht im wellenleitenden Faserbereich (Faserkern z.B. bei Multimodefasern) liegen und Absorptionsbanden im Arbeitswellenlängenbereich aufweisen, sind insbesondere die hier betrachteten beiden Punktdefekte unkritisch.

Die möglichen Quellen für Wasserstoff sind entweder die umgebende Atmosphäre der Faser unter den konkreten späteren Einsatzbedingungen der Faser oder der Wasserstoff wird vom umgebenden Kabelmaterial, in das die Faser eingebunden ist, abgegeben.

Durch den interstitiellen Wasserstoff werden im wellenleitenden Kernbereich unerwünschte Zusatzdämpfungen insbesondere bei 1240 und 1590 nm erzeugt. Durch die Reaktion von Wasserstoff mit bestimmten Glasdefekten im wellenleitenden Bereich können z.B. Si-OH-Bindungen entstehen, die bei einer Wellenlänge von 1383 nm das Licht absorbieren.

Da der typische Aufbau von Fasern für den Kommunikationssektor aus einem im allgemeinen dotierten wellenleitenden Faserkern und einem im allgemeinen undotierten Fasercladding besteht und die Wasserstoff-Einwirkung von der Faseraußenseite nach innen erfolgt, werden die Glasdefekte im undotierten Quarzglas, außerhalb des wellenleitenden Bereiches betrachtet, die den Wasserstoff binden sollen.

Neuere Faserdesigns insbesondere solche mit verminderter Makrokrümmungsempfindlichkeit (sowohl Single-Mode- als auch Multimode-Fasern) weisen um den Kern herum zusätzlich einen Fluor-dotierte Brechzahlgraben auf. Der Fluorgraben ist für die vorliegende Erfindung von Bedeutung, weil der durch die Fluor-Dotierung erzeugte Brechzahlgraben, die während des Faserziehprozesses zur gewünschten Defekterzeugung im Claddingbereich verwendete UV-Strahlung, für die Wellenleitung im Cladding nach dem Verschmelzen des Jacketingrohres mit der Kernpreform benötigt wird. Ohne den Brechzahlgraben würde die UV-Strahlung zur Defekterzeugung unterhalb der Ziehzwiebel auch in die Preform- bzw. den Faserkern geleitet werden und dort UV-induzierte unerwünschte Glasdefekte erzeugen.

Ein typischer Herstellungsprozess einer modernen krümmungsunempfindlichen Faser umfasst beispielsweise die MCVD-Abscheidung in einem F-300 Substratrohr (siehe https://www.heraeus.com/media/media/hqs/doc_hqs/products and solutions 8/opti cal_fiber/Fiber_Tubes_EN_2018_04.pdf) und das Kollabieren des innenbeschichteten Rohres zu einem massiven Stab. Nach der Preformherstellung erfolgt noch eine über mehrere Stunden andauernde thermische Behandlung in einer Wasserstoff-freien Plasmaflamme zur Abscheidung eines Fluorgrabens bei Temperaturen von über 2100 °C. Der anschließende Jacketingprozess erfolgt typischerweise online in einem Faserziehofen aus Graphitmaterial in einer Argon/Helium-Atmosphäre unter Verwendung von beispielsweise F-300 Jacketingrohr-Material. Das F-300 Rohrmaterial wird in rohrbasierten Preformherstellungsverfahren wie dem MCVD oder dem PCVD-Verfahren (plasma activated chemical vapor deposition) sowohl als Substrat- als auch als Jacketingrohrmaterial eingesetzt und weist typischerweise einen Cl-Gehalt von 800 bis 2000 ppm und/oder einen OH-Gehalt von 0,2 ppm auf (siehe https://www.heraeus.com/media/media/hqs/doc_hqs/products and solutions 8/opti cal_fiber/Fiber_Tubes_EN_2018_04.pdf). Eine Übersicht über die in Quarzglas prinzipiell auftretenden Defekte vermittelt Figur 1.

Die Reaktionsprodukte der E'- und NBOHC-Defekte mit Wasserstoff, d.h. Si-H- und Si-OH Bindungen) können zwar zu zusätzlichen optischen Absorptionen führen, weil die Defekte jedoch im Claddingbereich lokalisiert sind, wird die Wellenleitung im inneren Kernbereich durch diese Defekte nicht gestört. Der an den äußeren Defekten gebundene Wasserstoff kann nun nicht in den Faserkernbereich diffundieren und dort durch Reaktion mit gegebenenfalls vorhandenen anderen Defekten störende Absorptionen ausbilden.

Die Konzentration der E'- und NBOHC-Defekte ist abhängig vom Claddingmaterial (Herstellungsprozess, Verunreinigungsgrad), von der Stöchiometrie und von den Temperaturverhältnissen bei der Weiterverarbeitung und von der speziellen Laserbehandlung beim Abkühlprozess des Faserziehens. Dabei werden solche Prozessbedingungen gewählt, die die Erzeugung anderer als E'- und NBOHC-Defekte weitestgehend vermeiden und die Einwirkung von Wasserstoff beispielsweise durch eine Chlor-haltige Atmosphäre während der Glasherstellung auf ein Minimum reduzieren.

E'-Zentren liegen vorzugsweise in größeren Konzentrationen in Sauerstoff-Mangel-Quarzglas (oxygen deficient silica) hingegen NBOHC-Defekte vorzugsweise in Sauerstoff-Überschuss-SiO2 (oxygen excess silica) vor (siehe https://neup.inl.gov/SiteAssets/Final%20%20Reports/09-819%20NEUP%20Final%20Report.pdf, Seite 21 unten).

Tab.1: optische Parameter der beiden Defekte für die Ausbildung der H2-Diffusionsbarriere:

| Defekttyp | Absorptionspeak | Absorptionspeak | FWHM (the full width at half maximum) |
|---|---|---|---|
| | (eV) | (nm) | eV |
| E' | 5,8 | 214 | 0,7 |
| NBOHC | 2,0 | 620 | |
| NBOHC | 4,8 | 258 | 1,05 |
| NBOHC | 6,4-6,8 | 194-182 | |

Die Bildungsenergie von E'-Defekten liegt bei 3,8 eV (326 nm) und kann durch Laserstrahlung (z.B. He-CD-Laser 325 nm) gezielt erzeugt werden. Auch beim Faserziehen kann die E'-Defektkonzentration gezielt erhöht werden. Je höher die Ziehofentemperatur, umso größer ist die E'-Defektkonzentrationserhöhung (siehe Hibino et al., "ESR Study on E'-Centers Induced by Optical Fiber Drawing Process", Japanese Journal of Applied Physics, Volume 22, Part 2, Nr. 12). Die Konzentration an E'-Defekten und NBOHC-Defekten kann bestimmt werden wie von Yang beschrieben (Jing Yang, "Numerical modeling of hollow optical fiber drawing", Dissertation 2008, Rutgers State University of New Jersey).

Um die Eindringtiefe der Laserstrahlung in das Claddingglas zu berechnen, wird das Lambert-Beersche Absorptionsgesetz nach (https://sundoc.bibliothek.uni-halle.de/diss-online/04/04H209/t3.pdf, Seite 19) verwendet.

$$\frac{I}{I_0} = e^{-\alpha d}$$

Die Eindringtiefe der Laserstrahlung ist als die Schichtdicke d definiert, nach der die Intensität I auf 10 % ihres ursprünglichen Wertes $I_0$ abgefallen ist.

Tab.2: berechnete Eindringtiefe der Laserstrahlung in das Claddingglas F300 (Hersteller Fa. Heraeus Quarzglas) bei verschiedenen Laserwellenlängen:

| Wellenlänge in nm | Photonenenergie in eV | Absorptionskoeffizient in cm^-1 | Eindringtiefe in Quarzglas in cm | Quellenangabe |
|---|---|---|---|---|
| 155 | 8,0 | 50 (F300) | 0,05 | * Seite 5/ |
| 165 | 7,5 | 7 (F300) | 0,23 | * Seite 5/ |
| 191 | 6,5 | 2 (F300) | 1,2 | * Seite 5/ |
| 250 | 5,0 | ~ 0,5 | 4,6 | ** |
| 325 | 3,8 | | | |
| 1000 | 1,24 | 10*10^-6 | 2303000 | *** |
| * https://www.researchgate.net/profile/Giovanna_Navarra/publication/4155763_Abs orption edge_in silica_glass/ links/02e7e525fade3f17f2000000/Absorption-edge-in-silica-glass.pdf?origin=publication_detail <br> ** https://ntrs.nasa.gov/archive/nasa/casi.ntrs.nasa.gov/19660007266.pdf <br> *** https://www.crystran.co.uk/optical-materials/silica-glass-sio2 | | | | |

Nach der Optimierung des Faserziehprozesses, um die Erzeugung einer hohen Konzentration von E' und NBOHC-Defekten im F300-Claddingglas zu erhalten, erfolgt gleichzeitig die zusätzliche Erzeugung von den beiden Defekten durch eine spezielle UV-Laserstrahlung. Aus Skuja et al. (L. Skuja et al. "Laser-induced color enters in silica" Proc. SPIE vol. 4347, p. 1/14-14/14) ist bekannt, dass Laseranregung einen anisotropen Charakter aufweist und deshalb die räumliche Verteilung der induzierten Defekte nicht zufällig ist. Deshalb ist es erforderlich, um über den gesamten äußeren Umfang des Claddingbereiches der Faser gleichmäßig Defekte zu erzeugen, dass der Einstrahlwinkel in den Claddingbereich zur Richtung der Faserachse einen Winkel α aufweist.

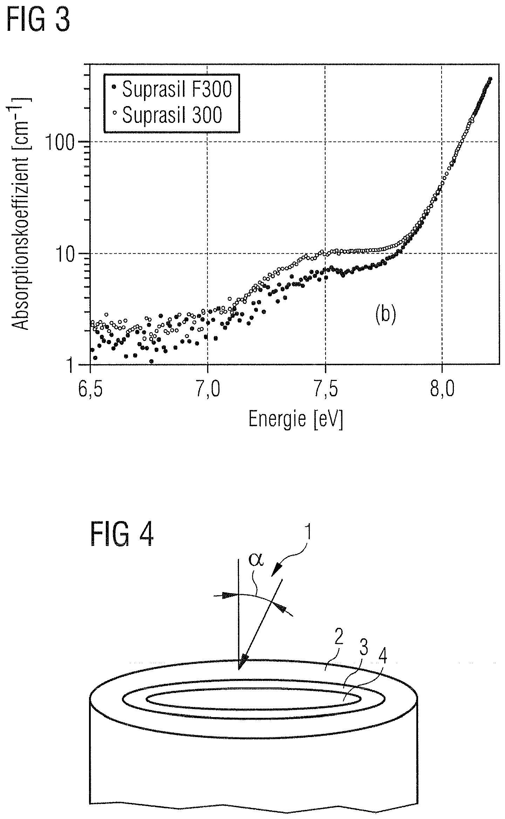

Um die über den Umfang gleichmäßige Defekterzeugung zu erreichen, soll außerdem die UV-Laserstrahlung oberhalb des Ziehofens entsprechend der Figur 4 in die Querschnittsfläche des äußeren Jacketingrohres eingekoppelt werden.

Der Einstrahlwinkel α der UV-Laserstrahlung in die Querschnittsfläche des äußeren Jacketingrohres muss so gewählt, dass die Numerische Apertur (NA) des Wellenleiters, der durch das Jacketingrohr mit der außenseitigen und innenseitigen Luftspalt bis zum Verschmelzen mit dem Fluorgraben der Primärpreform in der heißen Ofenzone gebildet wird, nicht überschritten wird. Die Brechzahlabsenkung des Fluorgraben gegenüber dem undotierten Claddingglas liegt typischerweise im Bereich von ca. -5 bis ca. -10*10^-3 (NA zw. 0,12 und 0,17, Einfallswinkel α zw. ≤ 5° und ≤ 7°). Vor dem Verschmelzen des Jacketingrohres mit der Kernpreform erfolgt die Wellenleitung im Jacketingrohrglas, dass innen und außen von Luft umgeben ist und deshalb eine deutlich größere NA aufweist.

In der heißen Zone des Ziehofens erfolgt die Verschmelzung der Innenseite des Jacketingrohres mit der Außenseite des Fluorgrabens der Kernpreform. Ab dieser Position sinkt die NA des äußeren Claddingwellenleiters auf die NA des Fluorgrabens. Dieser äußere Claddingwellenleiter ist unterhalb der Ziehzwiebel innerhalb des Ziehofens wirksam. Durch das Aufbringen des typischerweise verwendeten Zweischicht-Acrylats mit einer Brechzahl, die deutlich über der Brechzahl des Claddingmaterials liegt, verliert die Außenseite des äußeren Claddingwellenleiters seinen wellenleitenden Charakter und die restliche UV-Strahlung gelangt in das Coatingmaterial und wird dort ausgekoppelt und absorbiert. Das bedeutet, dass erst bei Applizierung des high index Standard-Acrylatcoatings auf die äußere Faseroberfläche die eingekoppelte UV-Laserstrahlung die Faser verlassen kann.

Ob die oberhalb des Ziehofens eingekoppelte UV-Strahlung bis an den Polymer-Coating-Beschichtungort gelangt, hängt von der Wellenlänge der verwendeten UV-Strahlung und dem Absorptions-Koeffizienten des verwendeten Claddingglases (Jacketingrohrmaterial) ab.

Durch die Kombination von besonders geeigneten Faserziehbedingungen mit der zusätzlichen Erzeugung von E' und NBOHC-Defekten durch ein unter einem Einfallwinkel α in die Faser eingekoppelte UV-Laserstrahlung geeigneter Wellenlänge und Intensität oberhalb des Ziehofens werden hinreichend hohe Konzentrationen von den gewünschten Defekten im äußeren Claddingmaterial unterhalb des Ziehofens gebildet, die eine Wasserstoff-Diffusionsbarriere in der gefertigten Faser erzeugen.

Die Erfindung betrifft somit ein Verfahren zur Herstellung einer Quarzglasfaser, wobei das Verfahren zumindest die Schritte (a)-(d) aufweist. Bevorzugt ist die Quarzglasfaser eine optische Quarzglasfaser und insbesondere eine Multimode-Faser.

In Schritt (a) wird eine Quarzglas-Primärpreform durch modifizierte chemische Gasphasenabscheidung (MCVD) in einem Quarzglas-Substratrohr erzeugt.

Das Substratrohr zur Erzeugung der Primärpreform ist bevorzugterweise ein F-300 Glasrohr, beispielsweise ein Quarzglas mit einer OH-Konzentration von ≤0,2 ppm, einem Chlor-Gehalt von 800-2000 ppm und/oder einem Brechungsindex von +0,35 bis +0,5×10$^{-3}$.

Der Schritt des Erzeugens einer Quarzglas-Primärpreform durch modifizierte chemische Gasphasenabscheidung (MCVD) in einem Quarzglasrohr umfasst das Kollabieren des Quarzglasrohres nach der Gasphasenabscheidung. Verfahren zur Herstellung von Preformen sind dem Fachmann bekannt. Solche Verfahren sind beispielsweise in folgenden Dokumenten beschrieben: DE69922728 T2, US4276243A, US4412853, und US4582480.

Die Quarzglas-Primärpreform weist bevorzugt eine Fluor-dotierte radiale Schicht auf dem Faserkern auf. Die Primärpreform kann mit Fluorgas behandelt werden, um diese Fluor-dotierte radiale Schicht auf der Primärpreform zu erzeugen. Die Brechzahlabsenkung von dem Faserkern zum Fluor-dotierten Bereich in der Primärpreform beträgt bevorzugt -5 bis -10×10$^{-3}$.

In Schritt (b) wird die Quarzglas-Primärpreform in ein (freies) Glas-Jacketingrohr eingebracht (siehe Figur 4). Hierbei kann ein normales Jacketingverfahren angewendet werden, mit dem Unterschied, dass erfindungsgemäße eine Bestrahlung des freien Jacketingrohrs mit UV-Strahlung erfolgt. Das Glas-Jacketingrohr ist bevorzugt aus Quarzglas.

In Schritt (c) wird defekt-erzeugende UV-Strahlung in die Querschnittsfläche des Glas-Jacketingrohrs eingestrahlt, während die Quarzglas-Primärpreform mit dem Glas-Jacketingrohr im Jacketing-Verfahren zum Erzeugen einer Cladding-Schicht zu einer Sekundärpreform kombiniert wird. Die (äußere) Cladding-Schicht basiert somit auf dem verwendeten Jacketingrohr.

Die defekt-erzeugende UV-Strahlung erzeugt in der Cladding-Schicht E'- und NBOHC-Defekte. Als Strahlungsquelle kann beispielsweise ein Exzimer-Laser (insbesondere ein He-CD-Laser 325 nm) verwendet werden.

Definition NBOHC-Defekt: Das Zentrum eines NBOHC-Defekts ist ein Sauerstoffatom mit nur einer Bindung zu einem Silicium-Atom und einem ungebundenen Elektron, d.h. dangling bond (= Si - O•), das z.B. anhand einer Absorptionsbande bei 260 nm und 630nm und seiner charakteristischen Fluoreszenz bei 650 nm nachweisbar ist (siehe auch L. Skuja et al., "Laser-induced color enters in silica", Proc. SPIE vol. 4347, p. 1/14-14/14).

Das Zentrum eines E'-Defekts ist ein dreifach koordiniertes Siliciumatom mit oder ohne einem paramagnetischen Elektron (= Si•), wobei der E'-Defekt z.B. anhand einer Absorptionsbande bei 210 nm mittels ESR bzw. EPR nachweisbar ist (siehe Hibino et al., "ESR Study on E'-Centers Induced by Optical Fiber Drawing Process", Japanese Journal of Applied Physics, Volume 22, Part 2, Nr. 12; und L. Skuja et al., "Laser-induced color enters in silica", Proc. SPIE vol. 4347, p. 1/14-14/14).

Si-OH-Bindungen absorbieren Wellen mit einer Wellenlänge von 1383 nm.

Die defekt-erzeugende UV-Strahlung wird quasi-axial in das freie Glas-Jacketingrohr eingestrahlt. Die quasi-axiale Einstrahlung der UV-Strahlung erfolgt, indem der Einstrahlwinkel in den Claddingbereich zur Richtung der Faserachse einen Winkel α aufweist. Der Einstrahlwinkel α der UV-Laserstrahlung in die Querschnittsfläche des äußeren Jacketingrohres wird so gewählt, dass die Numerische Apertur des Wellenleiters, der durch das Jacketingrohr mit der außenseitigen und innenseitigen Luftspalt bis zum Verschmelzen mit dem Fluorgraben der Primärpreform in der heißen Ofenzone gebildet wird, nicht überschritten wird. Der Einstrahlwinkel α der UV-Laserstrahlung ist beispielsweise größer 0° und kleiner 10°, beispielsweise größer 0° und kleiner 5°, oder größer 1° und kleiner 7°.

In einer Ausführungsform der Erfindung ist die Ofentemperatur während des Faserziehverfahrens aus der Sekundärpreform höher als die Ofentemperatur in konventionellen Verfahren, beispielsweise wird das Verfahren bei einer Ofentemperatur von mehr als 2280K, oder mehr als 2320, oder mehr als 2350 K, durchgeführt. Zudem kann eine erhöhte Ziehgeschwindigkeit von mehr als 25 m/min, oder mehr als 40 m/min oder mehr als 50 m/min angewendet werden.

Der Schritt des Erzeugens einer Quarzglas-Sekundärpreform umfasst das Kollabieren des Jacketingrohrs auf die Primärpreform. Das freie Glas-Jacketingrohr besteht beispielsweise aus Quarzglas mit einer OH-Konzentration von $\leq 0{,}2$ ppm, einem Chlor-Gehalt von 800-2000 ppm und/oder einem Brechungsindex von $+0{,}35$ bis $+0{,}5 \times 10^{-3}$. Ein Quarzglas mit geringem OH-Ionengehalt kann beispielsweise dadurch hergestellt werden, dass der Innenraum der Preform vor und/oder während der Herstellung der Glasfaser, zumindest aber während des Ziehprozesses, dampf- und/oder gasförmiges Chlor enthält.

In Schritt (d) wird eine Quarzglasfaser aus der Sekundärpreform gezogen.

Im erfindungsgemäßen Verfahren wird die Sekundärpreform nicht mit Wasserstoff vorbehandelt (d.h. nicht mit Wasserstoff beladen), da sonst die Defektbildung verhindert wird.

In einem optionalen Schritt (e) wird eine Polymerbeschichtung, insbesondere eine Polyacrylat-Beschichtung, auf die erzeugte Quarzglasfaser aufgebracht.

Bevorzugt umfasst das Verfahren keinen Schritt zum Aufbringen einer hermetischen Beschichtung, z.B. Kohlenstoff- oder Metallschicht, Silizium-, Bornitrid-, C:H- oder Si:H-Beschichtung und/oder zum Aufbringen einer Barriereschicht, beispielsweise einer GeO2-F- oder P2O5-F-dotierten Schicht.

Die erzeugte Quarzglasfaser weist auch beispielsweise keine weiteren dotierten Schichten auf.

Die Erfindung betrifft zudem eine Quarzglasfaser hergestellt oder herstellbar nach dem erfindungsgemäßen Verfahren. Die Quarzglasfaser ist durch die strukturellen Eigenschaften charakterisiert, die durch das erfindungsgemäße Verfahren erzeugt werden, d.h. die Claddingschicht weist E'- und NBOHC-Defekte auf. Die vorstehenden Ausführungsformen, die sich auf das erfindungsgemäße Verfahren beziehen, beziehen sich damit gleichermaßen auch auf die erfindungsgemäß herstellbare Quarzglasfaser.

Die Erfindung bezieht sich daher auch auf eine Quarzglasfaser, aufweisend:

a) einen Faserkern aus Quarzglas,
b) eine Fluor-dotierte radiale Schicht auf dem Faserkern,
c) eine Cladding-Schicht aus Quarzglas mit einer OH-Konzentration von $\leq 0{,}2$ ppm, einem Chlor-Gehalt 800-2000 ppm und/oder einem Brechungsindex von $+0{,}35$ bis $+0{,}5 \times 10^{-3}$ auf dem Faserkern,
wobei die Quarzglasfaser dadurch gekennzeichnet ist, dass
d) die Cladding-Schicht E'- und NBOHC-Defekte aufweist.

Die erfindungsgemäße Quarzglasfaser wird bevorzugt mit dem erfindungsgemäßen Verfahren hergestellt. Alle vorstehenden Ausführungsformen, die sich auf das erfindungsgemäße Verfahren beziehen, beziehen sich damit gleichermaßen auch auf die erfindungsgemäße Quarzglasfaser.

Die Cladding-Schicht weist eine höhere Dichte an E'- und NBOHC-Defekten auf als der Faserkern bzw. als das Quarzglas-Substratrohr, welches zur Erzeugung der primären Preform verwendet worden ist. In einer Ausführungsform wird das gleiche Quarzglas als Quarzglas-Substratrohr für die Herstellung der primären Preform und das freie Jacketingrohr verwendet. Dies führt zu zwei radialen Bereichen der Quarzglasfaser aus diesem Quarzglas, wobei der äußere Bereich (basierend auf dem Jacketingrohr) eine höhere Dichte an E'- und NBOHC-Defekten aufweist als der innere Bereich.

Die Quarzglasfaser ist bevorzugt eine Multimode-Faser. Im Gegensatz zu den bekannten Quarzglasfasern wird die Wasserstoff-unempfindlichkeit nicht durch eine hermetische Beschichtung, insbesondere nicht durch eine Kohlenstoff-, Metall-, Silizium-, Bornitrid-, C:H- oder Si:H-Beschichtung, erzielt.

Die Herstellung von hermetischen Beschichtungen mit Kohlenstoff oder Bornitrid ist bekannt (siehe http://www.dtic.mil/dtic/tr/fulltext/u2/a189886.pdf, oder https://www.osti.gov/servlets/purl/14067).

Die Brechzahlabsenkung von dem Faserkern zum Fluor-dotierten Bereich beträgt bevorzugt -5 bis $-10 \times 10^{-3}$. Es sind keine weiteren dotierten Schichten vorhanden, insbesondere nicht in der Claddingschicht.

Auf der Quarzglas-Claddingschicht ist bevorzugt eine Polymerbeschichtung aufgebracht, insbesondere eine Polyacrylat-Schicht.

Nachdem die Defekte in der Quarzglas-Claddingschicht im Laufe der Betriebsdauer mit Wasserstoff reagiert haben, ist eine Quarzfaser mit Si-OH und Si-H-Verbindungen entstanden, die eine Schutzbarriere gegen weiteren Wasserstoff darstellen.

Die Erfindung bezieht sich daher auch auf eine Quarzglasfaser, aufweisend:

a) einen Faserkern aus Quarzglas,
b) eine Fluor-dotierte radiale (Quarzglas-) Schicht auf dem Faserkern,
c) eine Cladding-Schicht aus Quarzglas mit einer OH-Konzentration von $\leq 0{,}2$ ppm, einem Chlor-Gehalt 800-2000 ppm und/oder einem Brechungsindex von $+0{,}35$ bis $+0{,}5 \times 10^{-3}$ auf dem Faserkern,
wobei die Quarzglasfaser dadurch gekennzeichnet ist, dass
d) die Cladding-Schicht Si-OH und/oder Si-H-Verbindungen aufweist.

Die Cladding-Schicht weist eine höhere Dichte an Si-OH und Si-H-Verbindungen auf als der Faserkern bzw. als das Quarzglas-Substratrohr, welches zur Erzeugung der primären Preform verwendet worden ist. In einer Ausführungsform wird das gleiche Quarzglas als Quarzglas-Substratrohr für die Herstellung der primären Preform und das freie Jacketingrohr verwendet. Dies führt zu zwei radialen Bereichen der Quarzglasfaser aus diesem Quarzglas, wobei der äußere Bereich (Claddingschicht) eine höhere Dichte an Si-OH und Si-H-Verbindungen aufweist als der innere Bereich. Dies kann spektroskopisch untersucht werden. Si-OH-Bindungen absorbieren Wellen mit einer Wellenlänge von 1383 nm. Bevorzugt wird die Claddingschicht aus F300 Quarzglas hergestellt, wobei die Konzentration an Si-OH in der erzeugten Claddingschicht nach Reaktion mit Wasserstoff mehr als 5 ppm beträgt und die Konzentration an Si-OH in dem Faserkern weniger als 5 ppm beträgt. Diese Ausführungsformen können auch mit den vorstehenden Ausführungsformen kombiniert werden.

## Figuren

Die vorliegende Offenbarung soll weiter anhand von Figuren erläutert werden:

**Figur 1:** Optische Absorptionsbanden der bekannten Defekte in Quarzglas (siehe L. Skuja et al., "Laser-induced color enters in silica" Proc. SPIE vol. 4347, p. 1/14-14/14). Nummerierung: 1: Fluoridgruppen =Si-F; 2: Hydridgruppen =Si-H; 3: Chloridgruppen ≡Si-Cl; 4: Sauerstoffvakanzen (SiODC(I)); 5; Hydroxylgruppen =Si-O-H; 6: Peroxybrücke Si-O-O-Si; 7: E* Zentren: ≡Si· Si= oder ≡Si·; 8: Peroxy-Radikale ≡Si-O-O·; 9: SiODC(II) (divalente Si/O-Vakanz); 10: Ozon $O_3$; 11: interstitielles $Cl_2$; 12: nicht-verbrückender Sauerstoff ≡Si-O ; 13: interstitieller Sauerstoff Oz; 14: selbstgefangene Löcher.

**Figur 2:** Abb. 2: die Reaktionen von E'- und NBOHC-Defekten in Quarzglas mit Wasserstoff (siehe https://neup.inl.gov/SiteAssets/Final%20%20Reports/09-819%20NEUP%20Final%20Report.pdf, Seite 28).

**Figur 3:** Gemessene Absorption von Suprasil F300 Quarzglas und Suprasil 300 bei 300 K als Funktion der Strahlungsenergie nach (siehe https://www.researchgate.net/profile/Giovanna_Navarra/publication/4155763_Absorption_edge_in_silica_glass/links/02e7e525fade3f17f2000000/Absorption-edge-in-silica-glass.pdf?origin=publication_detail).

**Figur 4:** Schematische Darstellung der zu verziehenden Preform vor dem Einfahren in den Ziehofen mit schematischer Darstellung der Einkopplung der UV-Laserstrahlung. Bezugszeichen: 1: UV-Laserstrahlung; 2: Jacketingrohr z.B. aus F300 Quarzglas; 3: Luftspalt zwischen Jacketingrohr und Primärpreform; 4: Primärpreform mit äußerem Fluorgraben. Figur 4 zeigt die Primärpreform, die in das freie Jacketingrohr eingeführt worden ist. Der Einstrahlwinkel wird wie vorstehend beschrieben gewählt.

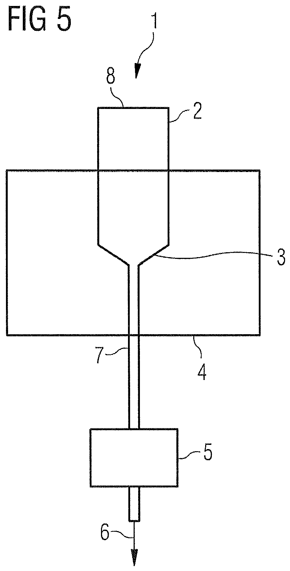

**Figur 5:** Schematischer Aufbau der Faserzieheinrichtung zur Herstellung von Wasserstoff-unempfindlichen Fasern mit hoher Faserfestigkeit und geringer Faserdämpfung. Bezugszeichen: 1: Preformvorschub; 2: Sekundärpreform bestehend aus Jacketingrohr und Kernpreform für online Jacketing; 3: Ziehzwiebel in der heißen Ofenzone; 4: Ziehofen mit eingetauchter Sekundärpreform; 5: Coating-Beschichtungseinheit; 6: Abzugsgeschwindigkeit der Faser; 7: Glasfaser nach Verlassen des Ziehofens; 8: Quasi-axiale UV-Lasereinstrahlung in den Querschnitt des Jacketingrohrs.

## Zitierte Druckschriften

https://www.researchgate.net/profile/Giovanna_Navarra/publication/4155763_ Absorption edge_in silica_glass/links/02e7e525fade3f17f2000000/Absorption-edge-in-silica-glass.pdf?origin=publication_detail

- https://www.lightbrigade.com/productionFiles/Resource-PDF/Whitepapers/Hermetic-Fiber-for-Oil-and-Gas.aspx
- http://www.dtic.mil/dtic/tr/fulltext/u2/a189886.pdf
- https://www.osti.gov/servlets/purl/14067
- https://sundoc.bibliothek.uni-halle.de/diss-online/04/04H209/t3.pdf
- https://ntrs.nasa.gov/archive/nasa/casi.ntrs.nasa.gov/19660007266.pdf
- https://www.crystran.co.uk/optical-materials/silica-glass-sio2
- Joshua M. Jacobs, "The impact of hydrogen on optical fibers", Corning White Paper, WP 9007, September 2004 (https://www.corning.com/media/worldwide/global/documents/sfiber%20WP9 007_Hydrogen%20Aging.pdf)
- https://neup.inl.gov/SiteAssets/Final%20%20Reports/09-819%20NEUP%20Final%20Report.pdf   https://www.heraeus.com/media/media/hqs/doc_hqs/products and solutions _8/optical_fiber/Fiber_Tubes_EN_2018_04.pdf

- Hibino et al., "ESR Study on E'-Centers Induced by Optical Fiber Drawing Process", Japanese Journal of Applied Physics, Volume 22, Part 2, Nr. 12
- https://www.laserfocusworld.com/articles/print/volume-51/issue-04/features/fiber-optic-components-harsh-environment-optical-fiber-coatingsbeauty-is-only-skin-deep.html
- https://www.researchgate.net/publication/253791167
- Jing Yang, "Numerical modeling of hollow optical fiber drawing", Dissertation 2008, Rutgers State University of New Jersey
- EP 95729 A2
- L. Skuja et al., "Laser-induced color enters in silica", Proc. SPIE vol. 4347, p. 1/14-14/14
- A.K. Pandey et al., "Refractive index profile design to improve hydrogen diffusion resistance property of optical fiber", ICOP 2009, International Conference on Optics and Photonics, India, Nov. 2009
- Troy et al., "Role of hydrogen loading and glass composition on the defects generated by the femtosecond laser writing process of fiber Bragg gratings" in Optical Materials Express 2(11):1663-1670,·November 2012
- DE69922728 T2,
- US4276243A,
- US4412853, und
- US4582480

**Patentansprüche**

1. Verfahren zur Herstellung einer Quarzglasfaser, wobei das Verfahren die folgenden Schritte aufweist:

   a) Erzeugen einer Quarzglas-Primärpreform durch modifizierte chemische Gasphasenabscheidung (MCVD) in einem Quarzglas-Substratrohr, wobei die Quarzglas-Primärpreform eine Fluor-dotierte radiale Schicht auf dem Faserkern aufweist;
   b) Einbringen der Quarzglas-Primärpreform in ein Glas-Jacketingrohr,
   c) Einstrahlen von defekt-erzeugender UV-Strahlung in die Querschnittsfläche des Glas-Jacketingrohrs, während die Quarzglas-Primärpreform mit dem Glas-Jacketingrohr im Jacketing-Verfahren zum Erzeugen einer Cladding-Schicht auf dem Faser-Kern zu einer Sekundärpreform kombiniert wird; und
   d) Ziehen einer Quarzglasfaser aus der Sekundärpreform.

2. Das Verfahren nach Anspruch 1, wobei die defekt-erzeugende UV-Strahlung in der Cladding-Schicht der Quarzfaser E'- und NBOHC-Defekte erzeugt.

3. Das Verfahren nach Anspruch 1 oder 2, wobei die defekt-erzeugende UV-Strahlung in das Glas-Jacketingrohr eingestrahlt wird.

4. Das Verfahren nach einem der Ansprüche 1-3, wobei das Glas-Jacketingrohr aus Quarzglas mit einer OH-Konzentration von ≤0,2 ppm, einem Chlor-Gehalt von 800-2000 ppm und/oder einem Brechungsindex von +0,35 bis +0,5×10⁻³ besteht.

5. Quarzglasfaser hergestellt oder herstellbar mittels des Verfahrens nach einem der Ansprüche 1-4.

6. Quarzglasfaser, aufweisend:

   a) einen Faserkern aus Quarzglas,
   b) eine Fluor-dotierte radiale Schicht auf dem Faserkern,
   c) eine Cladding-Schicht aus Quarzglas,

   wobei die Quarzglasfaser **dadurch gekennzeichnet ist, dass**

   d1) die Cladding-Schicht E'- und NBOHC-Defekte aufweist, oder.
   d2) die Cladding-Schicht Si-OH und Si-H-Verbindungen aufweist.

7. Die Quarzglasfaser nach Anspruch 6, wobei die Cladding-Schicht aus Quarzglas mit einer OH-Konzentration von ≤0,2 ppm, einem Chlor-Gehalt 800-2000 ppm und/oder einem Brechungsindex von +0,35 bis +0,5×10⁻³ auf dem Faserkern besteht, und wobei die Cladding-Schicht bevorzugt eine höhere Dichte an E'- und NBOHC-Defekten aufweist, als der Faserkern.

**8.** Die Quarzglasfaser nach Anspruch 5 oder 6, wobei die Quarzglasfaser keine weiteren dotierten Schichten aufweist.

**9.** Die Quarzglasfaser nach einem der Ansprüche 5-7, wobei die Quarzglasfaser keine hermetische Beschichtung aufweist.

**Claims**

**1.** A method of manufacturing a quartz glass fibre, said method comprising the steps of:

a) producing a quartz glass primary preform by modified chemical vapor deposition (MCVD) in a quartz glass substrate tube, said quartz glass primary preform having a fluorine-doped radial layer on the fibre core;
b) inserting the quartz glass primary preform into a glass jacketing tube;
c) irradiating defect-generating UV radiation into the cross-sectional area of the glass jacketing tube while combining the quartz glass primary preform with the glass jacketing tube in the jacketing process to form a cladding layer on the fibre core to a secondary preform; and
d) pulling a quartz glass fibre from the secondary preform.

**2.** The method according to claim 1, wherein the defect-generating UV radiation generates E' and NBOHC defects in the cladding layer of the quartz fibre.

**3.** The method according to claim 1 or 2, wherein the defect-generating UV radiation is irradiated into the glass jacketing tube.

**4.** The method according to any one of claims 1-3, wherein the glass jacketing tube consists of quartz glass with an OH concentration of $\leq$0.2 ppm, a chlorine content of 800-2000 ppm and/or a refractive index of +0.35 to +0.5$\times$10$^{-3}$.

**5.** A quartz glass fibre produced or producible by the method according to any one of claims 1-4.

**6.** Quartz glass fibre, comprising:

a) a fibre core of quartz glass,
b) a fluorine-doped radial layer on the fibre core,
c) a cladding layer of quartz glass,

wherein the quartz glass fibre is **characterized in that**

d1) the cladding layer has E' and NBOHC defects, or,
d2) the cladding layer has Si-OH and Si-H compounds.

**7.** The quartz glass fibre according to claim 6, wherein the cladding layer is quartz glass having an OH concentration of $\leq$0.2 ppm, a chlorine content of 800-2000 ppm and/or a refractive index of +0.35 to +0.5$\times$10$^{-3}$ on the fibre core, and wherein the cladding layer preferably has a higher density of E'- and NBOHC defects than the fibre core.

**8.** The quartz glass fibre according to claim 5 or 6, wherein the quartz glass fibre has no further doped layers.

**9.** The quartz glass fibre according to any one of claims 5-7, wherein the quartz glass fibre has no hermetic coating.

**Revendications**

**1.** Procédé de fabrication d'une fibre de verre de quartz, le procédé comprenant les étapes suivantes :

a) production d'une préforme primaire en verre de quartz par dépôt chimique en phase vapeur modifié (MCVD) dans un tube substrat en verre de quartz, la préforme primaire en verre de quartz comprenant une couche radiale dopée au fluor sur le coeur de fibre ;

b) introduction de la préforme primaire en verre de quartz dans un tube de chemisage en verre,

c) irradiation d'un rayonnement UV générateur de défauts dans la surface de section transversale du tube de chemisage en verre, tandis que la préforme primaire en verre de quartz est combinée avec le tube de chemisage en verre par un procédé de chemisage destiné à produire une couche de gainage sur le coeur de fibre pour former une préforme secondaire ; et

d) étirage d'une fibre de verre de quartz à partir de la préforme secondaire.

2. Procédé selon la revendication 1, dans lequel le rayonnement UV générateur de défauts produit des défauts E' et NBOHC dans la couche de gainage de la fibre de quartz.

3. Procédé selon la revendication 1 ou 2, dans lequel le rayonnement UV générateur de défauts est irradié dans le tube de chemisage en verre.

4. Procédé selon l'une quelconque des revendications 1 à 3, dans lequel le tube de chemisage en verre est constitué de verre de quartz ayant une concentration en OH ≤ 0,2 ppm, une teneur en chlore de 800 à 2 000 ppm et/ou un indice de réfraction de +0,35 à +0,5×10$^{-3}$.

5. Fibre de verre de quartz fabriquée ou susceptible d'être fabriquée au moyen du procédé selon l'une quelconque des revendications 1 à 4.

6. Fibre de verre de quartz, comprenant :

   a) un coeur de fibre en verre de quartz,
   b) une couche radiale dopée au fluor sur le coeur de fibre,
   c) une couche de gainage en verre de quartz,

   la fibre de verre de quartz étant **caractérisée en ce que**

   d1) la couche de gainage présente des défauts E' et NBOHC, ou
   d2) la couche de gainage comprend des composés Si-OH et Si-H.

7. Fibre de verre de quartz selon la revendication 6, dans laquelle la couche de gainage est constituée de verre de quartz ayant une concentration en OH ≤ 2 ppm, une teneur en chlore de 800 à 2 000 ppm et/ou un indice de réfraction de +0,35 à +0,5×10$^{-3}$ sur le coeur de fibre, et dans laquelle la couche de gainage présente de préférence une densité de défauts E' et NBOHC plus élevée que le coeur de fibre.

8. Fibre de verre de quartz selon la revendication 5 ou 6, dans laquelle la fibre de verre de quartz ne comprend pas d'autres couches dopées.

9. Fibre de verre de quartz selon l'une quelconque des revendications 5 à 7, dans laquelle la fibre de verre de quartz ne comprend pas de revêtement hermétique.

# FIG 1

## FIG 2

$$\equiv Si\text{-}O^{\bullet} + H_2 \;\rightarrow\; \equiv Si\text{-}O\text{-}H + H^{\bullet}$$
$$\equiv Si\text{-}O^{\bullet} + H^{\bullet} \;\rightarrow\; \equiv Si\text{-}O\text{-}H$$
$$\equiv Si^{\bullet} + H_2 \;\rightarrow\; \equiv Si\text{-}H + H^{\bullet}$$
$$\equiv Si^{\bullet} + H^{\bullet} \;\rightarrow\; \equiv Si\text{-}H$$

FIG 3

FIG 4

FIG 5

**EP 3 983 346 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0095729 A2
- WO 2007069275 A2
- DE 69900363 T2
- DE 69922728 T2
- US 4276243 A
- US 4412853 A
- US 4582480 A
- EP 95729 A2

**In der Beschreibung aufgeführte Nicht-Patentliteratur**

- **PANDEY et al.** Refractive index profile design to improve hydrogen diffusion resistance property of optical fiber. *ICOP 2009, International Conference on Optics and Photonics, India,* November 2009
- **HIBINO et al.** ESR Study on E'-Centers Induced by Optical Fiber Drawing Process. *Japanese Journal of Applied Physics,* vol. 22 (12
- **TROY et al.** Role of hydrogen loading and glass composition on the defects generated by the femtosecond laser writing process of fiber Bragg gratings. *Optical Materials Express,* November 2012, vol. 2 (11), 1663-1670
- Numerical modeling of hollow optical fiber drawing. **JING YANG.** Dissertation. Rutgers State University of New Jersey, 2008
- **L. SKUJA et al.** Laser-induced color enters in silica. *Proc. SPIE,* vol. 4347, 1-14, 14-14
- **JOSHUA M. JACOBS.** The impact of hydrogen on optical fibers. *Corning White Paper, WP 9007,* September 2004, https://www.corning.com/media/worldwide/global/documents/sfiber%20WP9 007_Hydrogen%20Aging.pdf
- **A.K. PANDEY et al.** Refractive index profile design to improve hydrogen diffusion resistance property of optical fiber. *ICOP 2009, International Conference on Optics and Photonics, India,* November 2009

16